# EUROPÄISCHE PATENTSCHRIFT

(11) **EP 1 326 453 B1**
(45) Veröffentlichungstag und Bekanntmachung des Hinweises auf die Patenterteilung: **19.03.2008**
(21) Anmeldenummer: 02000122.8
(22) Anmeldetag: 03.01.2002
(51) Int. Cl.: H04Q 3/00

(54) **Anordnung und Verfahren zur Optimierung der Verkehrsbelastung in einem Telekommunikations und/oder Datennetz**
Apparatus and method for optimizing the traffic load in a telecommunication and/or data network
Appareil et procédé d'optimisation de la charge de trafic dans un réseau de télécommunication et/ou de données

(43) Veröffentlichungstag der Anmeldung: 09.07.2003
(73) Patentinhaber: Nokia Siemens Networks GmbH & Co. KG, 81541 München (DE)
(72) Erfinder: Jenzowsky, Stefan, 13465 Berlin (DE); Ryll, Frank, 13156 Berlin (DE)

(56) Entgegenhaltungen:
- EP-A- 1 079 639
- WO-A-00/31987

## Beschreibung

Die Erfindung betrifft eine Anordnung zur Optimierung der Verkehrsbelastung in einem TK- bzw. Datennetz nach dem Oberbegriff des Anspruchs 1 sowie ein entsprechendes Betriebsverfahren eines solchen Netzes.

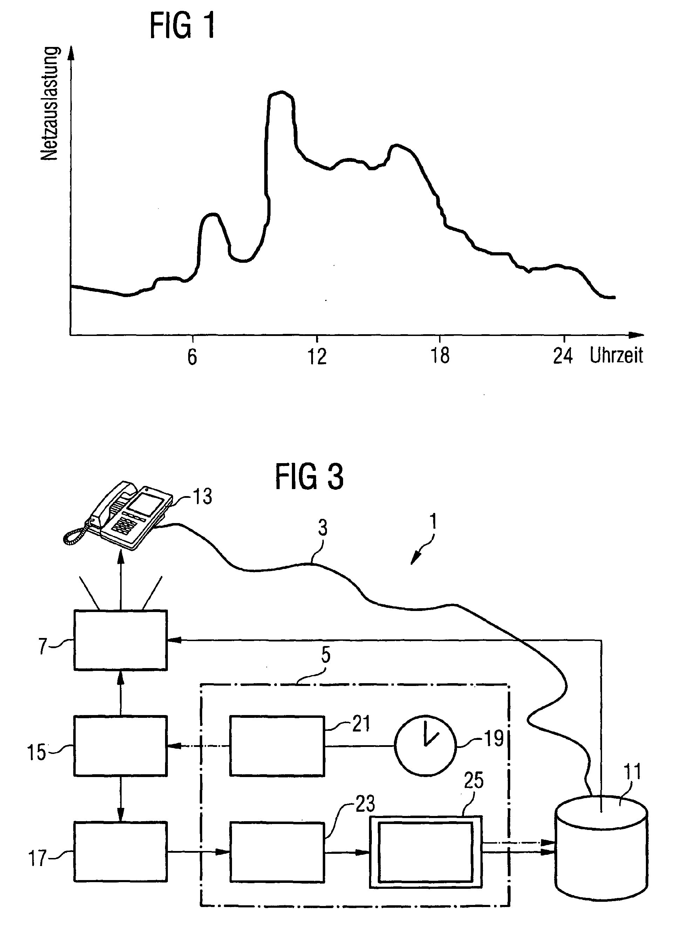

Herkömmliche Telekommunikations- bzw. Datennetze, gleich welcher Technologie/Verfahren (z.B. POTS, ISDN, CableTV, Breitbandinternet, GSM, PCS, PHS, CDMA, TDMA, UMTS; unabhängig von kanalgebundener oder paketorientierter Übertragung) weisen eine im Tagesverlauf stark schwankende Auslastung ihrer Verkehrskapazität auf. In den verkehrsschwachen Zeiten werden z. T. mehr als 90% der vorhandenen Kapazität nicht genutzt. Ein Beispiel für eine typische Netzauslastungskurve in Abhängigkeit von der Zeit zeigt Fig. 1.

Bisher wird diesem Umstand lediglich durch relativ schwach und undifferenziert wirkende nicht-technische (ökonomische) Mittel (z. B. Tarifgestaltung) abgeholfen, oder er wird als gegeben hingenommen. Sowohl im öffentlichen Festnetz (PSTN) als auch in den Mobilfunknetzen werden aus diesem Grund seit längerem spezielle Tarifstrukturen mit erheblichen Gebührendifferenzen zwischen verkehrsstarken und verkehrsschwachen Zeiten angeboten. Für das normale Telefonieren (d. h. Sprechverbindungen) lassen sich aufgrund der normalen Tagesrhythmen der meisten Menschen - im privaten Bereich - und angesichts üblicher Arbeitszeiten - im kommerziellen Bereich - Umschichtungen des Verkehrsaufkommens ohnehin nur bedingt verwirklichen. Auch spezielle Tarifstrukturen der Internetprovider, mit denen die Nutzung des öffentlichen Festnetzes als Datennetz zu verkehrsschwachen Zeiten für die Nutzer attraktiv gemacht werden soll, haben aber nur relativ kleine Nutzergruppen angesprochen und daher nur einen begrenzten Erfolg erzielt.

In dem Maße, wie die Netzressourcen der TK-Netze neben dem Telefonieren für zusätzliche - teilweise mit weitaus höherem Bandbreiten- und sonstigen Ressourcenbedarf verbundene - Dienste genutzt werden sollen, wird die Organisierung einer möglichst gleichmäßig hohen Auslastung zunehmend wichtig. Einerseits begrenzt die Netzauslastung zu den Spitzenzeiten kapazitätsseitig das mögliche Angebot zusätzlicher (insbesondere ressourcenintensiver) Dienste, und zum anderen bestimmt die Auslastung der kostspieligen Infrastruktur natürlich in erheblichem Maße den Preis der über das TK-Netz angebotenen Dienste.

In der WO 00/31987 ist ein System beschrieben, das durch Auswertung der Netzauslastung eine Übersicht über tatsächliche Netzkapazitäten erhält. Durch Vermittlung der Kapazitäten an potentielle Käufer wird die verfügbare Netzkapazität zu jeweils angemessenen Preisen verkauft.

Es ist zu erwarten, daß es in den nächsten Jahren zu einer Optimierung der Netzauslastung durch den gezielten Einsatz von bestimmten Applikationen kommen wird. Dies können Applikationen sein, die spezifische Nutzungszeiten aufweisen (z. B. Erotika-Inhalte), nur zu bestimmten Zeiten zugänglich sind (z. B. Horoskope, Tagebuch-Applikationen) oder günstigere Tarife zu verkehrsarmen Zeiten ausnutzen (z. B. Fax-Versand in der Nacht). Diese Art der Optimierung ist, ebenso wie eine ökonomische Optimierung durch vergünstigte Nutzungspreise zu verkehrsschwachen Zeiten (z. B. in der Nacht), vermutlich durchaus zielführend.

Wenn die Möglichkeiten dieser Optimierung der Netzauslastung mittels gezielt nutzungszeitabhängig gestalteter Applikationen sowie spezieller Tarifstrukturen weitgehend ausgeschöpft sind, wird ein zunehmender Bedarf nach technischen Lösungen zur Erhöhung der mittleren Netzauslastung entstehen.

Der Erfindung liegt folglich die Aufgabe zugrunde, eine Anordnung sowie ein Verfahren der gattungsgemäßen Art bereitzustellen, mit denen diesem Bedarf Rechnung getragen und eine zukunftssichere technische Lösung bereitgestellt werden kann, die einen wesentlichen Beitrag zu einer Erhöhung der mittleren Auslastung von TK- bzw. Datennetzen leistet.

Diese Aufgabe wird in ihrem Vorrichtungsaspekt durch eine Anordnung mit den Merkmalen des Anspruchs 1 und in ihrem Verfahrensaspekt durch ein Verfahren mit den Merkmalen des Anspruchs 10 gelöst.

Es ist ein wesentlicher Gedanke der Erfindung, daß in Fortführung der bereits etablierten oder in Einführung befindlichen tarif- und angebotsseitigen Maßnahmen in einem weiteren Schritt die Triggerung und Steuerung von Applikationen jeder Art durch die Netzauslastung eine deutlich feiner granulare und höher dynamische optimierung zulassen. Die angegebene Anordnung und das vorgeschlagene Verfahren sind zu einer schnelleren und präziseren Steuerung der Netzauslastung geeignet. Durch diese schnellere und präzisere Form der Optimierung der Netzauslastung von Telekommunikationsnetzwerken können höhere Netzauslastungskoeffizienten erreicht werden, die ihrerseits zu einem erhöhten Return-on-Invest für die Netzwerkbetreiber führen. Damit ist das vorgeschlagene Verfahren geeignet, zu einem erheblich höheren Return-on-Invest beim Betrieb von Telekommunikationsnetzwerken (und gegebenenfalls niedrigeren Dienstpreisen für die Kunden) zu führen.

Anordnungsseitig gehört zur Erfindung also die Implementierung von technischen Mitteln zur Überwachung der Verkehrsbelastung sowie von mit diesen verbundenen Sendeeinheiten zur Übermittlung entsprechender Lastnachrichten bei den hinsichtlich ihrer Auslastung zu überwachenden Netzelementen. Moderne Netzinfrastrukturen verfügen indes bereits weitgehend über derartige technische Mittel. Weiterhin sind bei der Netzbetriebssteuereinheit Mittel zum Empfang der Lastnachrichten von den Netzelementen sowie eine Auswertungs- und Entscheidungseinheit zu deren Auswertung und zur Ausführung vorbestimmter Steuervorgänge im Ergebnis der Auswertung zu realisieren.

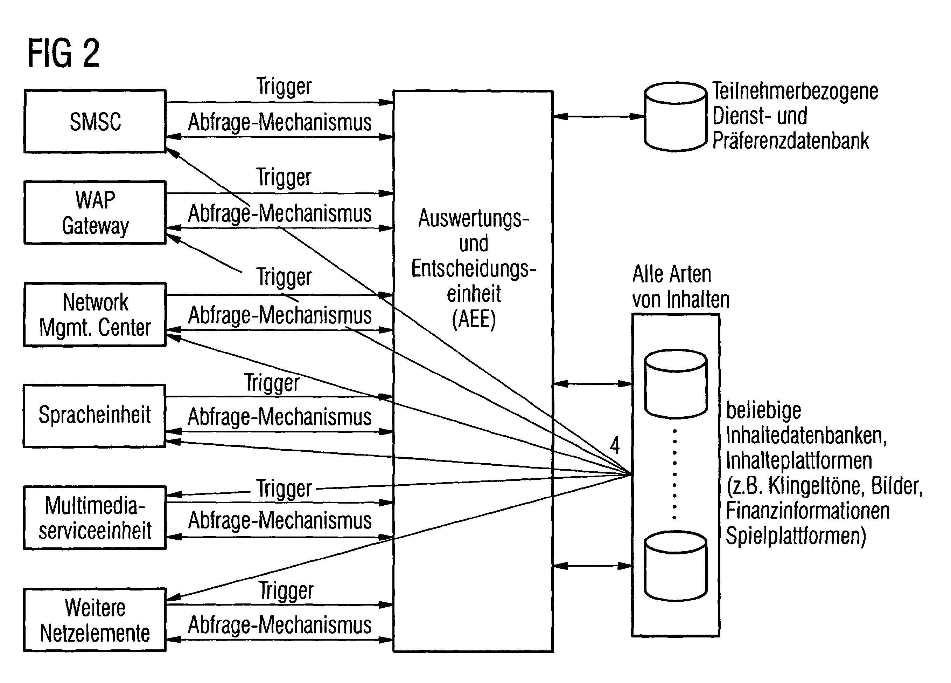

In Fig. 2 ist in einer Prinzipskizze die erfindungsgemäße Lösung an einer stark vereinfachten TK-Netzstruktur dargestellt. Die Figur ist aufgrund der Beschriftung im wesentlichen selbsterklärend, so daß nachfolgend keine geschlossene Beschreibung gegeben, sondern nur auf hervorhebenswerte Aspekte hingewiesen wird.

Alle relevanten Netzelemente (z.B. SMSC, WAP-Gateway, Multimedia-Serviceeinheit) sowie Netzkontroll- und Steuereinheiten (z.B. Network Management Center = NMC) senden entweder verkehrsabhängige Trigger (nachfolgend auch bezeichnet als "Lastnachrichten") an die Auswertungs- und Entscheidungseinheit AEE oder werden von der AEE nach dem Verkehrsstatus abgefragt.

In Abhängigkeit von der dienstspezifischen Verkehrslast wird die AEE nach der Auswertung der Dienste- und Teilnehmerdatenbanken solche Steuerinformationen an Inhaltedatenbanken bzw. -plattformen senden, die diese veranlassen, Informationen an die Nutzer solcher Dienste zu senden.

Wesentliche Aspekte des Verfahrens und der Anordnung sind:
- ein- oder mehrstufige Trigger, die durch verschiedene Netzelemente oder Netzüberwachungs- bzw. -Steuereinheiten an die AEE geschickt werden,
- Schnittstellen an den Netzelementen, die das Abfragen des Verkehrsstatus durch die AEE zulassen.
- die AEE, die mit den Netzelementen oder Netzüberwachungs- bzw. -steuereinheiten und die weiterhin
- mit verschiedenen Datenbanken, z. B. Teilnehmer- und Inhaltedatenbanken oder -plattformen verbunden ist, um von diesen Einrichtungen Daten abzufragen und ereignissteuernde Informationen an diese zu senden.

Die AEE wird gesteuert durch dienstspezifische Algorithmen, die als Eingangsparameter die Uhrzeit und u. a. Daten aus den o. g. Datenbanken bzw. von den Plattformen erhält. Als Ergebnis der Bewertung dieser Parameter wird die AEE Steuerinformationen an die Datenbanken bzw. Plattformen senden, die diese veranlassen, Informationen an einen oder mehrere Dienstnutzer (Teilnehmer) zu senden, um bei diesen die weitere unmittelbar folgende Dienstnutzung anzuregen. Es wird also im Zusammenwirken der AEE mit den Inhaltedatenbanken bzw. -plattformen die Auslastung niedrig belasteter Netzelemente durch selektive Inhalte-Übermittlung an die Nutzer unmittelbar oder über eine das Verkehrsaufkommen erhöhende Aktivität, die von den Nutzern ausgeht, mittelbar erhöht.

In einer ersten wichtigen Anwendung der vorgeschlagenen Anordnung und des entsprechenden Verfahrens umfaßt das Telekommunikations- bzw. Datennetzwerk ein zellulares Mobilfunknetz, und als Netzelemente werden mindestens ein SMSC und/oder ein WAP-Gateway und/oder ein Network Management Center und/oder eine Spracheinheit und/oder eine Multimedia-Serviceeinheit hinsichtlich ihrer Auslastung überwacht und gesteuert. Eine perspektivisch nicht minderwichtige Anwendung betrifft Festnetze, insbesondere Breitband-, Schmalband- oder Telefoniekabelnetze, mit den relevanten Netzelementen Network Management Center und/oder Spracheinheit und/oder Multimedia-Serviceeinheit und/oder Zugangspunkten für Telekommunikations- und Datendienste.

Sofern in einer weitestgehend universellen Lösung alle derzeit denkbaren Arten von Applikationen mit der vorgeschlagenen Lösung in den Kontext einer Optimierung der Netzauslastung eingebunden werden sollen, sind alle beschriebenen konstruktiven Merkmale notwendig. Die Optimierung kann jedoch auch nur für einige Applikationen durchgeführt werden (z. B. nur für Online-Spiele). Dies verringert den Implementierungsaufwand, da nur diese Applikationen Informationen von der Auswertungs- und Entscheideeinheit erhalten müssen. Sollen nur einige Netzelemente in die Optimierung einbezogen werden, dann senden auch nur diese Einheiten Trigger an die AEE aus.

Das vorgeschlagene Verfahren ist der nicht-technischen (ökonomischen) Optimierung der Netzauslastung deutlich in Hinsicht auf
- Geschwindigkeit,
- Granularität der Steuerung (kleinere Auslastungslücken sind optimierbar),
- Adaptationsfähigkeit (Reaktion aus unvorhergesehen Ereignisse, schnelle Schwankungen der Netzlast, Teilausfall des Telekommunikationsnetzwerkes),
- Einbezug von Nutzerdaten (z. B. Erstnutzung der Applikation vs. Spätere Nutzung),
- Return-on-Invest für den Netzwerkbetreiber und den Applikationsanbieter,
überlegen. Es ermöglicht eine quasi-dynamische Steuerung, insbesondere Steigerung, der Verkehrsauslastung von Telekommunikationsnetzen.

Das Versenden der o. g. Informationen ist für den/die Betreiber kostenneutral möglich, da die dazu nötige Infrastruktur (Netzelemente, Kontroll- und Steuereinrichtungen etc.) bereits vorhanden ist und derzeit in der Regel einer unwirtschaftlich geringen Nutzung unterliegen.

Vorteile und Zweckmäßigkeiten der Erfindung ergeben sich im übrigen aus den Unteransprüchen sowie der nachfolgenden Beschreibung eines bevorzugten Ausführungsbeispiels der Anordnung sowie von Anwendungsbeispielen und -szenarien.

Fig. 3 zeigt in Art eines Funktions-Blockschaltbildes wesentliche Komponenten einer bevorzugten Ausführungsform der erfindungsgemäßen Optimierungsanordnung 1 in einem TK-Netz 3. Das TK-Netz 3 hat eine zentrale Netzbetriebssteuereinheit 5, die - unter anderem - zur Steuerung einer möglichst hohen Netzauslastung ausgebildet ist (und deren Funktion hier auch nur insoweit beschrieben wird). Im dargestellten Beispiel kommuniziert die Netzbetriebssteuereinheit 5 mit einem Netzelement 7, um dessen Verkehrsbelastung zu erfassen, und einer Spieledatenbank 11, um Inhalte derselben mit einer in Abhängigkeit von der Netzauslastung eingestellten Datenrate einem Nutzer an einem TK-Endgerät 13 anzubieten. (In Wirklichkeit umfaßt eine Netzstruktur, bei der die Anwendung der Erfindung sinnvoll ist, eine Mehrzahl von Netzelementen, an die eine Vielzahl von TK-Endgeräten angeschlossen ist, und im Normalfall auch eine Mehrzahl von Inhaltedatenbanken oder - plattformen zur Bereitstellung von Information- oder Kommunikationsressourcen an die TK-Endgeräte.)

Dem Netzelement 7 ist eine Verkehrsbelastungs-Überwachungseinheit 15 zur Erfassung der aktuellen Verkehrsbelastung zugeordnet, die ihrerseits mit einer Lastnachrichten-Sendeeinheit 17 zur Übermittlung einer die entsprechende Information beinhaltenden Lastnachricht an die Netzbetriebssteuereinheit 5 verbunden ist. Die Funktion der Verkehrsbelastungs-Überwachungseinheit 15 wird von der Netzbetriebssteuereinheit 5 aus gesteuert, die zu diesem Zweck einen Zeitgeber 19 und eine mit diesem verbundene Triggersignal-Sendeeinheit 21 zur Aussendung eines jeweils einen Erfassungsvorgang initiierenden Triggersignals aufweist.

Die Lastnachricht gelangt in der Netzbetriebssteuereinheit zur einer Lastdaten-Empfangseinheit 23 und von dieser - in geeignet aufbereiteter Form - zu einer Auswertungs- und Entscheidungseinheit 25. Diese erzeugt im Ergebnis einer Auswertung gemäß einem vorbestimmten Algorithmus eine Steuernachricht, die an die Spieledatenbank 11 übermittelt wird und dort die Aussendung einer vorbestimmten Informationsnachricht an das TK-Endgerät 13 über das Netzelement 7 ansteuert. Diese Informationsnachricht selbst oder ein durch sie initiierter, vom Nutzer des Endgerätes 13 ausgelös-ter Kommunikationsvorgang bewirken eine geeignete Steuerung der Netzlast am Netzelement 7 in Abhängigkeit von dessen aktuell festgestellter Belastung. Beispiele für solche Steuervorgänge werden nachfolgend skizziert.

In der Zukunft werden z. B. in einem UMTS-Netzwerk Spiele, Video, Musik und Fotos übertragen werden. Durch das beschriebene Verfahren wird es möglich sein, viele dieser Applikationen auf Basis der Netzwerkauslastung
a) zu gestalten (siehe Beispiel unten),
b) zu aktivieren (z. B. Datenversand für ein weiteres Spiele-Level),
c) im Schwierigkeitsgrad oder der Darstellung anzupassen,
d) zu beenden oder einzuschränken.

Für Spiele ergeben sich folgende Möglichkeiten:
- Schwierigkeitsgrad wird durch Netzauslastung gesteuert,
- Bonusspiele werden durch Netzauslastung gesteuert,
- Aktionen in den Spielen werden durch Netzauslastung gesteuert (z. B. Gegner greift an),
- Spezielle Eigenschaften werden durch Netzauslastung gesteuert,
- SMS, die dem Fortgang des Spieles dienen, werden durch Netzauslastung gesteuert.

Für SMS ergeben sich folgende Möglichkeiten:
- Einladungen werden durch Netzauslastung gesteuert versendet,
- Werbung wird durch Netzauslastung gesteuert versendet,
- Einladung zum Spielen durch Netzauslastung gesteuert.

Für Mobile Commerce ergeben sich folgende Möglichkeiten:
- Gutscheine durch Netzauslastung gesteuert versendet,
- Coupons durch Netzauslastung gesteuert versendet.

Für Information/Infotainment ergibt sich z. B.:
- Horoskope werden durch Netzauslastung gesteuert versendet,
- Wetterberichte werden durch Netzauslastung gesteuert versendet.

### Beispielszenario 1:

Simulationsspiel im World Wide Web (WWW), das primär durch ein WWW-Interface (Webbrowser) und sekundär durch SMS (mobiler Anteil) vom Nutzer gesteuert wird. Das Simulationsspiel läuft kontinuierlich im WWW ab und kann SMS verschicken und empfangen.

Aufruf durch Endnutzer: Sonntag 21.45 Uhr, Zugang über Webbrowser.

Nutzer startet die Exploration von 3 fremden Planeten von einer Raumstation aus.

Aufruf durch Endnutzer: Montag 9.10 Uhr, Zugang über Webbrowser.

Nutzer startet die Besiedelung von 2 der 3 fremden Planeten. Aufruf durch netzlastabhängigen Trigger (Mobilfunknetz <20% Netzauslastung für SMS): Montag 11.45 Uhr, Versendung von SMS durch die Applikation. SMS-Inhalt: Auf einem der Planeten ereignete sich ein Erdbeben.

Montag 11.49 Uhr:

Nutzer versendet SMS/nutzt WAP-Zugang: Bergungsarbeiten einleiten.

Aufruf durch netzlastabhängigen Trigger (Mobilfunknetz <20% Netzauslastung für SMS): Montag 13.55 Uhr, Versendung von SMS durch die Applikation. SMS-Inhalt: Auf einem der Planeten ereignete sich erneut ein Erdbeben.

Montag 14.10 Uhr:

Nutzer versendet SMS/nutzt WAP-Zugang: Evakuierung des Planeten einleiten.

Aufruf durch Endnutzer: Montag 21.45 Uhr, Zugang über Webbrowser.

Nutzer siedelt alle Personen auf anderen Planeten um und startet neue Planetenexploration.

### Beispielszenario 2:

Autorennspiel, Übertragung via UMTS, Aufgabe: Steuerung eines Rennwagens.

Erster Aufruf durch Endnutzer: Sonntag 21.45 Uhr, 20% Netzauslastung.

AEE sendet entsprechende Trigger, speichert Nutzung.

Setting: Tag. Auflösung: hoch. Umgebung: Zuschauer sind zu sehen, animiert, die Haare der Zuschauer flattern im Wind. Zweiter Aufruf durch Endnutzer: Mittwoch 12.45 Uhr, 80% Netzauslastung.

AEE sendet entsprechende Trigger, speichert Nutzung.

Setting: Nebel. Auflösung: gering. Umgebung: Nur die Fahrbahn ist sichtbar, der Rest verschwimmt im Nebel.

Dritter Aufruf durch Endnutzer: Mittwoch 23.11 Uhr, 10% Netzauslastung. AEE sendet entsprechende Trigger, speichert Nutzung.

Setting: Tag. Auflösung: sehr hoch. Umgebung: Zuschauer, hohe Auflösung. Zusätzlich werden Bonusrunden vergeben.

Vierter Aufruf durch Endnutzer: Donnerstag 15.55 Uhr, 90% Netzauslastung.

AEE sendet entsprechende Trigger, speichert Nutzung.

Setting: Nacht. Auflösung: sehr niedrig. Umgebung: Nur die Lichtkegel des Autos sind zu sehen, der Rest verbleibt in schwarzer Nacht.

Die Ausführung der Erfindung ist nicht auf die oben beschriebenen Beispiele und hervorgehobenen Aspekte beschränkt, sondern ebenso in einer Vielzahl von Abwandlungen möglich, die im Rahmen fachgemäßen Handelns liegen.

## Patentansprüche

1. Anordnung (1) zur Optimierung der Verkehrsbelastung in einem Telekommunikations- und/oder Datennetz (3) mit einer Mehrzahl funktional selbständiger Netzelemente, einer Mehrzahl von mit zumindest einem Netzelement (7) verbundenen Inhaltedatenbanken (11) und/oder -plattformen und einer Netzbetriebssteuereinheit (5),
**dadurch gekennzeichnet, daß**
- mindestens einem Teil der Netzelemente Verkehrsbelastungs-Überwachungseinheiten (15) und mit diesen verbundene Lastnachrichten-Sendeeinheiten (17) zur Übermittlung von die Verkehrsbelastung des jeweiligen Netzelementes signalisierenden Lastnachrichten an die Netzbetriebssteuereinheit zugeordnet sind,
- die Netzbetriebssteuereinheit (5)
- eine Lastdaten-Empfangseinheit (23) zum Empfang der Lastnachrichten mindestens eines Teils der Netzelemente und
- eine eingangsseitig mit der Lastdaten-Empfangseinheit verbundene Auswertungs- und Entscheidungseinheit (25) zur Auswertung der Lastnachrichten und zur Ausgabe von Steuersignalen in Abhängigkeit vom Nachrichteninhalt an ausgewählte Inhaltedatenbanken oder -plattformen
aufweist und
- die Inhaltedatenbanken (11) und/oder -plattformen zur Aussendung vorbestimmter Inhalte oder anderer Information an mit ausgewählten Netzelementen verbundene Telekommunikations- oder Datenendgeräte von Nutzern im Ansprechen auf die Steuersignale ausgebildet sind.

2. Anordnung nach Anspruch 1,
derart ausgestaltet, dass
den Verkehrsbelastungs-Überwachungseinheiten (15) oder den Lastnachrichten-Sendeeinheiten (17) der Netzelemente (7) Zeitgeber zugeordnet sind, zur Ansteuerung der Erfassung der Verkehrsbelastung oder zur Aussendung einer Lastnachricht an die Netzbetriebssteuereinheit zu vorbestimmten Zeitpunkten oder in vorbestimmten Zeitintervallen.

3. Anordnung nach Anspruch 1,
derart ausgestaltet, dass
die Verkehrsbelastungs-Überwachungseinheiten (15) Diskriminatoreinheiten aufweisen, zum laufenden Vergleich einer erfaßten Verkehrsbelastung mit vorprogrammierten Schwellwerten und zur Ansteuerung einer Aussendung einer Lastnachricht bei Über- und/oder Unterschreitung dieser Schwellwerte.

4. Anordnung nach Anspruch 1,
derart ausgestaltet, dass
der Auswertungs- und Entscheidungseinheit (25) der Netzbetriebssteuereinheit ein Zeitgeber (19) und ein mit diesem verbundener Triggerimpulssender (21) zugeordnet sind, zur Generierung und Versendung von Triggerimpulsen zur Abfrage von Lastnachrichten bei den Verkehrsbelastungs-Überwachungseinheiten (15) .

5. Telekommunikations- und/oder Datennetz mit einer Anordnung nach einem der vorangehenden Ansprüche,
**dadurch gekennzeichnet, daß**
das Telekommunikations- /oder Datennetz (5) ein zellulares Mobilfunknetz aufweist und zumindestens eines der folgenden Netzelemente umfasst ist:
- SMSC
- WAP-Gateway
- Network Management Center
- Spracheinheit
- Multimedia-Serviceeinheit.

6. Telekommunikations- und/oder Datennetz mit einer Anordnung nach einem der Ansprüche 1 - 4,
**dadurch gekennzeichnet, daß**
das Telekommunikations- oder Datennetz (5) ein öffentliches Festnetz aufweist und zumindest eines der folgenden Netzelemente umfasst ist:
- Network Management Center
- Spracheinheit
- Multimedia-Serviceeinheit
- Zugangspunkte für Telekommunikations- und Datendienste.

7. Telekommunikations- und/oder Datennetz nach Anspruch 5 oder 6,
**gekennzeichnet durch**
eine über eine Steuerung mit der Auswertungs- und Entscheidungseinheit verbundene Teilnehmer-Datenbank, zur Speicherung von Teilnehmer-Profildaten der mit den Netzelementen verbundenen Nutzer.

8. Telekommunikations- und/oder Datennetz nach einem der Ansprüche 5 oder 7,
**dadurch gekennzeichnet, daß**
die Inhaltedatenbanken (11) vorprogrammierte Ruftöne, Textbausteine von Kurznachrichten, Bilder, Videos oder Musikstücke in Form abrufbarer Files gespeichert enthalten.

9. Telekommunikations- und/oder Datennetz nach einem der Ansprüche 5 oder 8,
**dadurch gekennzeichnet, daß** als Inhalteplattformen eine Finanz- bzw. Geldanlageplattform oder eine Spieleplattform oder eine Kontaktplattform oder Shopping- oder Werbeplattform vorgesehen sind.

10. Verfahren zur Optimierung der Verkehrsbelastung in einem Telekommunikations- und/oder Datennetz mit einer Mehrzahl funktional selbständiger Netzelemente, einer Mehrzahl von mit zumindest einem Netzelement verbundenen Inhaltedatenbanken und/oder -plattformen und einer Netzbetriebssteuereinheit,
**dadurch gekennzeichnet, daß**
- bei den Netzelementen die aktuelle Verkehrsbelastung erfaßt wird,
- im Ansprechen auf Zeitgeber- oder externe Triggersignale oder das Ergebnis eines Vergleiches mit vorprogrammierten Schwellwerten Lastnachrichten zur Signalisierung der Verkehrsbelastung generiert und an die Netzbetriebssteuereinheit gesandt werden,
- die Lastnachrichten bei der Netzbetriebssteuereinheit empfangen und ausgewertet werden und
- in Abhängigkeit vom Nachrichteninhalt der ausgewerteten Lastnachrichten Steuersignale an ausgewählte Inhaltedatenbanken oder -plattformen zur Aussendung vorbestimmter Inhalte oder anderer Information an mit ausgewählten Netzelementen verbundene Telekommunikations- bzw. Datenendgeräte von Nutzern erzeugt werden.

11. Verfahren nach Anspruch 10,
**dadurch gekennzeichnet, daß**
die Netzbetriebssteuereinheit Triggersignale an die Netzelemente zur Generierung bzw. Übermittlung von Lastnachrichten aussendet.

12. Verfahren nach einem der Ansprüche 10 oder 11,
**dadurch gekennzeichnet, daß**
die Ausgabe von Steuersignalen an ausgewählte Inhaltedatenbanken oder -plattformen in Abhängigkeit von vorgespeicherten Profildaten der Nutzer erfolgt.

## Claims

1. Arrangement for optimizing the traffic load in a telecommunication and/or data network (3) having a plurality of network elements which are functionally independent, a plurality of content databases (11) and/or platforms connected to at least one network element (7), and a network operation control unit (5),
**characterized in that**
- at least some of the network elements have associated traffic load monitoring units (15) and load message transmission units (17) connected thereto for transmitting load messages which signal the traffic load of the respective network element to the network operation control unit,
- the network operation control unit (5) has
- a load data reception unit (23) for receiving the load messages from at least some of the network elements and
- an evaluation and decision unit (25), whose input is connected to the load data reception unit, for evaluating the load messages and for outputting control signals on the basis of the message content to selected content databases or platforms,
and
- the content databases (11) and/or platforms are designed to transmit predetermined contents or other information to users' telecommunication or data terminals connected to selected network elements in response to the control signals.

2. Arrangement according to Claim 1,
in such a form that
the traffic load monitoring units (15) or the load message transmission units (17) associated with the network elements (7) have associated timers, for actuating detection of the traffic load or for transmitting a load message to the network operation control unit at predetermined times or at predetermined time intervals.

3. Arrangement according to Claim 1,
in such a form that
the traffic load monitoring units (15) have discriminator units, for the continual comparison of a detected traffic load with preprogrammed threshold values and actuation of the transmission of a load message if these threshold values are exceeded and/or undershot.

4. Arrangement according to Claim 1,
in such a form that
the evaluation and decision unit (25) in the network operation control unit has an associated timer (19) and an associated trigger pulse transmitter (21) connected thereto, for generating and sending trigger pulses for requesting load messages from the traffic load monitoring units (15).

5. Telecommunication and/or data network having an arrangement according to one of the preceding claims
**characterized in that**
the telecommunication and/or data network (5) has a cellular mobile radio network and comprises at least one of the following network elements:
- SMSC
- WAP gateway
- network management centre
- voice unit
- multimedia service unit.

6. Telecommunication and/or data network having an arrangement according to one of Claims 1 - 4,
**characterized in that**
the telecommunication and/or data network (5) has a public landline network and comprises at least one of the following network elements:
- network management centre
- voice unit
- multimedia service unit
- access points for telecommunication and data services.

7. Telecommunication and/or data network according to Claim 5 or 6,
**characterized by**
a subscriber database connected to the evaluation and decision unit via a controller, for storing subscriber profile data for the users connected to the network elements.

8. Telecommunication and/or data network according to one of Claims 5 and 7,
**characterized in that**
the content databases (11) contain preprogrammed ringtones, text blocks from short messages, pictures, videos or pieces of music, stored in the form of retrievable files.

9. Telecommunication and/or data network according to one of Claims 5 and 8,
**characterized in that**
the content platform provided is a financial or money investment platform or a games platform or a contact platform or shopping or advertising platform.

10. Method for optimizing the traffic load in a telecommunication and/or data network having a plurality of network elements which are functionally independent, a plurality of content databases and/or platforms connected to at least one network element, and a network operation control unit,
**characterized in that**
- the current traffic load is detected for the network elements,
- load messages for signalling the traffic load are generated and sent to the network operation control unit in response to timer or external trigger signals or the result of a comparison with preprogrammed threshold values,
- the load messages are received and evaluated on the network operation control unit, and
- the message content of the evaluated load messages is taken as a basis for generating control signals to selected content databases or platforms for the purpose of sending predetermined contents or other information to users' telecommunication or data terminals connected to selected network elements.

11. Method according to Claim 10,
**characterized in that**
the network operation control unit transmits trigger signals to the network elements for the purpose of generating and transmitting load messages.

12. Method according to one of Claims 10 and 11,
**characterized in that**
control signals are output to selected content databases or platforms on the basis of previously stored profile data for the users.

## Revendications

1. Dispositif (1) d'optimisation de la charge de trafic dans un réseau de télécommunication et/ou dans un réseau de données (3) comprenant une pluralité d'éléments de réseau (7) autonomes du point de vue fonctionnel, une pluralité de banques de données de contenus (11) et/ou de plateformes de contenus, connectées à au moins un élément de réseau (7), et une unité de commande d'exploitation du réseau (5),
**caractérisé en ce que**
- des unités de contrôle de la charge du trafic (15) et des unités d'émission de messages de trafic (17) raccordées à celles-là sont affectées à au moins une partie des éléments de réseau pour la transmission, à l'unité de commande d'exploitation du réseau, de messages de charge signalisant la charge de trafic de l'élément de réseau respectif,
- **en ce que** l'unité de commande d'exploitation du réseau (5) présente
- une unité de réception de données de charge (23) pour la réception des messages de charge d'au moins une partie des éléments de réseau, et
- une unité d'évaluation et de décision (25) raccordée côté entrée à l'unité de réception de données de charge, pour l'évaluation des messages de charge et pour la sortie de signaux de commande, en fonction du contenu des messages, à des banques de données de contenus ou à des plateformes de contenus sélectionnées,
et
- **en ce que** les banques de données de contenus (11) et/ou les plateformes de contenus sont exécutées pour l'émission de contenus prédéterminés ou d'autres informations à des terminaux de télécommunication ou à des terminaux de données d'utilisateurs raccordés à des éléments de réseau sélectionnés en réponse aux signaux de commande.

2. Dispositif selon la revendication 1,
exécuté de telle manière que
des horloges sont affectées aux unités de contrôle de la charge de trafic (15) ou aux unités d'émission de messages de charge (17) des éléments de réseau (7), pour activer l'enregistrement de la charge de trafic ou pour émettre un message de charge à l'unité de commande d'exploitation du réseau à des moments prédéterminés ou à des intervalles de temps prédéterminés.

3. Dispositif selon la revendication 1,
exécuté de telle manière que
les unités de contrôle de la charge de trafic (15) présentent des unités de discriminateur pour la comparaison courante d'une charge de trafic enregistrée avec des valeurs seuil préprogrammées et pour l'activation d'une émission d'un message de charge en cas de dépassement vers le haut et/ou de dépassement vers le bas de ces valeurs seuil.

4. Dispositif selon la revendication 1,
exécuté de telle manière qu'
une horloge (19) et un émetteur d'impulsions de déclenchement (21) raccordé à celle-ci sont affectés à l'unité d'évaluation et de décision (25) de l'unité de commande d'exploitation du réseau (19) pour générer et émettre des impulsions de déclenchement pour l'interrogation de messages de charge dans les unités de contrôle de la charge de trafic (15).

5. Réseau de télécommunication et/ou réseau de données comprenant un dispositif selon les revendications précédentes,
**caractérisé en ce que**
le réseau de télécommunication ou le réseau de données (5) présente un réseau de radiocommunication mobile cellulaire et **en ce qu'**il comprend au moins un des éléments de réseau suivante :
- SMSC
- passerelle WAP
- Network Management Center
- unité vocale
- unité de service multimédia

6. Réseau de télécommunication et/ou réseau de données comprenant un dispositif selon l'une quelconque des revendications 1 à 4,
**caractérisé en ce que**
le réseau de télécommunication ou le réseau de données (5) présente un réseau fixe public et au moins un des éléments de réseau suivantes :
- Network Management Center
- unité vocale
- unité de service multimédia
- points d'accès pour des services de télécommunication et de données.

7. Réseau de télécommunication et/ou réseau de données selon l'une quelconque des revendications 5 ou 6,
**caractérisé par**
une banque de données d'abonnés raccordée à l'unité d'évaluation et de décision par l'intermédiaire d'une commande, pour mémoriser des données de profil d'abonné des utilisateurs raccordés aux éléments de réseau.

8. Réseau de télécommunication et/ou réseau de données selon l'une quelconque des revendications 5 ou 7,
**caractérisé en ce que**
les banques de données de contenus (11) contiennent des tonalités d'appel préprogrammées, des modules de texte de messages courts, des images, des vidéos ou des morceaux de musique sous forme de fichiers pouvant être appelés.

9. Réseau de télécommunication et/ou réseau de données selon l'une quelconque des revendications 5 ou 8,
**caractérisé en ce qu'**
en tant que plateforme de contenus sont prévues une plateforme de finance resp. de placement d'argent ou une plateforme de jeux ou une plateforme de contacts ou une plateforme d'achat ou une plateforme de publicité.

10. Procédé d'optimisation de la charge de trafic dans un réseau de télécommunication et/ou dans un réseau de données comprenant une pluralité d'éléments de réseau autonomes du point de vue fonctionnel, une pluralité de banque de données de contenus et/ou plateformes de contenus, connectées à au moins un élément de réseau, et une unité de commande d'exploitation du réseau,
**caractérisé en ce que**
- la charge de trafic momentanée est saisie dans les éléments de réseau,
- en réponse à des signaux d'horloge ou à des signaux externes de déclenchement ou au résultat d'une comparaison avec des valeurs seuil préprogrammées, des messages de charge sont générés pour la signalisation de la charge de trafic et émis à l'unité de commande d'exploitation du réseau,
- les messages de charge sont reçus dans l'unité de commande d'exploitation du réseau et sont évalués, et
- **en ce qu'**en fonction du contenu des messages de charge évalués, des signaux de commande sont générés à des banques de données de contenus ou à des plateformes de contenus sélectionnées, pour l'émission de contenus prédéterminés ou d'autres informations à des terminaux de télécommunication resp. à des terminaux de données d'utilisateurs, raccordés à des éléments de réseau sélectionnés.

11. Procédé selon la revendication 10,
**caractérisé en ce que**
l'unité de commande d'exploitation du réseau émet des signaux de déclenchement aux éléments de réseau pour générer resp. transmettre des messages de charge.

12. Procédé selon l'une quelconque des revendications 10 ou 11,
**caractérisé en ce que**
la sortie de signaux de commande à des banques de données de contenus sélectionnées ou à des plateformes de contenus est réalisée en fonction de données préprogrammées de profil des utilisateurs.
